# EUROPÄISCHE PATENTANMELDUNG

(11) **EP 4 624 139 A1**
(43) Veröffentlichungstag der Anmeldung: **01.10.2025**
(21) Anmeldenummer: 24166634.6
(22) Anmeldetag: 27.03.2024
(51) Int. Cl.: B29C 65/20, B29C 65/30, E04D 15/04, B29K 95/00

(54) **VERBINDUNGSAUTOMAT UND KONTAKTHEIZVORRICHTUNG ZUM THERMISCH INDUZIERTEN, STOFFSCHLÜSSIGEN VERBINDEN VON FLACHEN, FLEXIBLEN MATERIALLAGEN**

(71) Anmelder: Leister Technologies AG, 6056 Kägiswil (CH)
(72) Erfinder: Gasser, Stefan, 6072 Sachseln (CH); Fanger, Rafael, 6063 Stalden (CH); Küng, Pascal, 6010 Kriens (CH); Christen, Peter, 6010 Kriens (CH)
(74) Vertreter: Witte, Weller & Partner Patentanwälte mbB

(57) **Zusammenfassung**

Die vorliegende Erfindung betrifft eine Kontaktheizvorrichtung (10) zum thermisch induzierten stoffschlüssigen Verbinden von schweiß- und/oder klebbaren flachen flexiblen Materiallagen miteinander, die als Materialbahn, Materialband und/oder Materialstück ausgebildet und sich zumindest teilweise überdeckend angeordnet sind, mit: einer ersten Anschlusselektrode (11) und einer zweiten Anschlusselektrode (12); und einem zwischen den Anschlusselektroden (11, 12) angeschlossenen Heiz-element (14); wobei das Heiz-element (14) als direkt bestromter, flacher, planarer Stahlblechzuschnitt ausgebildet ist. Die vorliegende Erfindung betrifft ferner einen Verbindungsautomat (1), ein Handgerät (60) sowie ein Verfahren (100).

## Beschreibung

Die vorliegende Erfindung betrifft eine Kontaktheizvorrichtung zum thermisch induzierten stoffschlüssigen Verbinden von schweiß- und/oder klebbaren flachen flexiblen Materiallagen miteinander, die als Materialbahn, Materialband und/oder Materialstück ausgebildet und sich zumindest teilweise überdeckend angeordnet sind. Die vorliegende Erfindung betrifft ferner Verbindungsautomaten und ein Handgerät zum thermisch induzierten stoffschlüssigen Verbinden von schweiß- und/oder klebbaren flachen flexiblen Materiallagen miteinander.

Systeme und Verbindungsautomaten zum thermisch induzierten stoffschlüssigen Verbinden von schweiß- und/oder klebbaren flachen flexiblen Materiallagen miteinander sind aus dem Stand der Technik dem Grunde nach bekannt. Beispielsweise entwickelt und fertigt die Schweizer Firma und vorliegende Anmelderin "Leister Technologies AG" Schweißautomaten und Schweißmaschinen, die insbesondere zum Verschweißen von thermoplastischen Membranen auf Dächern, Deponien, Tunnels, LKW-Planen und Beschattungssystemen eingesetzt werden. Der Wärmeeintrag kann mittels Heißluft oder über einen Heizkeil erfolgen.

Elektrische Heizelemente sind an sich bekannt und werden beispielsweise auch in Schweißeinrichtungen für das Überlappungsschweißen von Kunststoffbahnen verwendet, bei dem die Bahnen, an ihren Fügeflächen durch Temperatureinwirkung mittels einem Heizkeil erwärmt, plastifiziert bzw. aufgeschmolzen und anschließend unter Druckeinwirkung mittels Andruckrollen stoffschlüssig verbunden werden. Dabei wird der Heizkeil bei anliegenden Folienbahnen zwischen den Bahnen geführt. Gebräuchliche Schweißkeile sind aus einem dreidimensionalen keilförmigen Block hergestellt, vorwiegend aus Metall wegen dessen guter Wärmeleiteigenschaften, und werden mittels einer Heizpatrone, welche in den keilförmigen Körper des Heizkeils eingeführt wird, auf eine Temperatur oberhalb der Schmelztemperatur der Kunststoffbahn oder oberhalb der Schmelztemperatur eines darauf applizierten Klebstoffs erhitzt.

EP 2 005 795 B1 offenbart ein elektrisches Heizelement, insbesondere für eine Heizkeil-Folienschweißeinrichtung, mit zwei Elektroden und einem zwischen den Elektroden angeordneten Heizwiderstand, so dass ein Anlegen einer elektrischen Spannung an die Elektroden die Erzeugung von Wärme über die Länge des Heizwiderstandes bewirkt, wobei der Heizwiderstand aus einem korrosionsbeständigen Material hergestellt ist und eine Oberseite und eine der Oberseite gegenüberliegende Unterseite des Heizwiderstandes unter einem spitzen Winkel zusammenlaufen, wobei der Heizwiderstand unter Verwendung eines elektrisch leitfähigen Keramikmaterials hergestellt ist.

Der Heizwiderstand ist gemäß EP 2 005 795 B1 entsprechend der Form eines dreidimensionalen Heizkeiles einer Folienschweißmaschine ausgebildet, so dass er die Heizpatrone und den Heizkeil einer herkömmlichen Folienschweißeinrichtung ersetzen kann.

EP 3 269 534 B1 offenbart einen Verbindungsautomaten und ein Verfahren zum thermisch induzierten stoffschlüssigen nahtförmigen Verbinden von schweiß- und/oder klebbaren flachen flexiblen Materiallagen miteinander, die als Materialbahn, Materialband und/oder Materialstück ausgebildet und sich zumindest teilweise überdeckend angeordnet sind, mittels einer elektrisch geregelten Kontaktheizeinrichtung in Heizkeilschweißverfahren. Hierbei wird die Temperatur und/oder die Leistung des Heizkeils, der von einem dreidimensional keilförmig gefalteten Stahlblechzuschnitt gebildet ist, in Abhängigkeit von der Relativgeschwindigkeit zwischen den Materiallagen und dem Verbindungsautomaten geregelt. Dies erfolgt derart, dass die von dem Heizkeil an die zu verschweißenden Materiallagen übertragene Wärmeenergie konstant gehalten wird. Dazu wird die Relativgeschwindigkeit erfasst und die Leistung des Heizkeils bei Änderungen der Relativgeschwindigkeit automatisch nachreguliert.

Vor diesem Hintergrund ist es eine Aufgabe der vorliegenden Offenbarung, eine verbesserte Kontaktheizvorrichtung, einen verbesserten Verbindungsautomaten und/oder ein verbessertes Handgerät zum thermisch induzierten stoffschlüssigen Verbinden von schweiß- und/oder klebbaren flachen flexiblen Materiallagen miteinander, die als Materialbahn, Materialband und/oder Materialstück ausgebildet und sich zumindest teilweise überdeckend angeordnet sind, bereitzustellen. Insbesondere wäre es wünschenswert, die Handhabung zu verbessern und auch weniger erfahrenen Nutzern die Handhabung zu erleichtern. Auch wäre es wünschenswert die Betriebssicherheit weiter zu verbessern. Ferner wäre es wünschenswert, die Effizienz und/oder eine Schweißgeschwindigkeit zu verbessern.

Gemäß einem ersten Aspekt der vorliegenden Offenbarung wird eine Kontaktheizvorrichtung zum thermisch induzierten stoffschlüssigen Verbinden von schweiß- und/oder klebbaren flachen flexiblen Materiallagen miteinander, die als Materialbahn, Materialband und/oder Materialstück ausgebildet und sich zumindest teilweise überdeckend angeordnet sind, bereitgestellt mit: einer ersten Anschlusselektrode und einer zweiten Anschlusselektrode; und einem zwischen den Anschlusselektroden angeschlossenen Heizelement; wobei das Heizelement als direkt bestromter, flacher, planarer Stahlblechzuschnitt ausgebildet ist. Das Heizelement kann aus einem direkt bestromten, flachen und planaren Stahlblechzuschnitt bestehen.

Gemäß einem weiteren Aspekt der vorliegenden Offenbarung wird ein Verbindungsautomat zum thermisch induzierten, stoffschlüssigen Verbinden von flachen, flexiblen Materiallagen vorgeschlagen mit einer Kontaktheizvorrichtung wie im Rahmen der vorliegenden Offenbarung beschrieben. Im Rahmen der vorliegenden Offenbarung wird eine Verbindungsautomat auch als Schweißautomat bezeichnet. Der Automat kann dabei als fahrbare Vorrichtung ausgelegt sein, die sich entlang des Verbindungsbereichs bewegt. Der Automat kann aber auch als stationäre Vorrichtung ausgelegt sein, bei welcher sich der Verbindungsbereich relativ zur Vorrichtung bewegt.

Gemäß einem weiteren Aspekt der vorliegenden Offenbarung wird ein Handgerät, insbesondere ein batteriebetriebenes Handgerät, zum thermisch induzierten, stoffschlüssigen Verbinden von flachen, flexiblen Materiallagen vorgeschlagen mit einer Kontaktheizvorrichtung wie im Rahmen der vorliegenden Offenbarung beschrieben.

Gemäß einem weiteren Aspekt der vorliegenden Offenbarung wird ein Verfahren zum thermisch induzierten, stoffschlüssigen Verbinden von flachen, flexiblen Materiallagen vorgeschlagen mit einer Kontaktheizvorrichtung wie im Rahmen der vorliegenden Offenbarung beschrieben.

Gemäß einem weiteren Aspekt der vorliegenden Offenbarung wird die Verwendung einer Kontaktheizvorrichtung zum thermisch induzierten stoffschlüssigen Verbinden von schweiß- und/oder klebbaren flachen flexiblen Materiallagen miteinander, die als Materialbahn, Materialband und/oder Materialstück ausgebildet und sich zumindest teilweise überdeckend angeordnet sind, vorgeschlagen, wobei die Kontaktheizvorrichtung Folgendes aufweist: eine erste Anschlusselektrode und eine zweite Anschlusselektrode; und ein zwischen den Anschlusselektroden angeschlossenes Heizelement; wobei das Heizelement als direkt bestromter, flacher, planarer Stahlblechzuschnitt ausgebildet ist.

Die Erfinder haben erkannt, dass im bisherigen Stand der Technik im Gebiet der Kontaktheizvorrichtung zum thermisch induzierten stoffschlüssigen Verbinden von schweiß- und/oder klebbaren flachen flexiblen Materiallagen miteinander, die als Materialbahn, Materialband und/oder Materialstück ausgebildet und sich zumindest teilweise überdeckend angeordnet sind, keilförmige Heizkeile eingesetzt werden, d.h. 3D Festkörper, insbesondere mit eingeführten Heizpatronen oder gefaltete keilförmige Strukturen. Eine derartige keilförmige Struktur aus dem Stand der Technik weist eine hohe mechanische Stabilität auf.

Bei der Lösung gemäß einem Aspekt der vorliegenden Erfindung wird hingegen ein anderer Ansatz vorgeschlagen, wobei das zwischen den Anschlusselektrodenangeschlossene Heizelement aus einem direkt bestromten, flachen, planaren Stahlblechzuschnitt besteht. Statt also eine Kontaktheizvorrichtung mit möglichst hoher mechanischer Stabilität in Form eines Keils bereitzustellen, ist das Heizelement als direkt bestromter, flacher, planarer Stahlblechzuschnitt ausgebildet. Die Verwendung eines flachen Stahlblechs führt zu einer hohen, mechanischen Flexibilität des Heizelements, was sich positiv auf die thermische Kontaktierung zwischen Heizelement und Schweißmaterial auswirkt, welche essenziell ist für eine gute Schweißqualität. Das Heizelement kann also als flexibles Heizelement ausgebildet sein und kann dazu eingerichtet sein sich einem variablen Konturverlauf zwischen den Materiallagen anzupassen. Ein Vorteil der vorgeschlagenen Lösung kann darin bestehen, dass eine thermische Kontaktierung auf einfache und kostengünstige Art und Weise verbessert wird. Im Gegensatz hierzu wird bei herkömmlichen Heizkeilen ein thermischer Kontakt durch die Steilheit der oberen und unteren Flächen des Keils erzwungen. Dies kann bei herkömmlichen Heizkeilen ferner einen höheren Kraftaufwand beim Vorschub des Heizkeils zwischen den Materiallagen erfordern.

Ein weiterer Vorteil der vorgeschlagenen Lösung kann darin bestehen, dass durch die Flexibilität des Heizelements aus einem flachen planaren Stahlblechzuschnitt neben Unebenheiten auch leichte Fehleinstellungen bzw. -manipulationen ausgeglichen werden können. Mit anderen Worten kann eine derartige Kontaktheizvorrichtung fehlertolerant bezüglich einer nicht vollständig korrekt ausgerichteten Anbringung der Kontaktheizvorrichtung bzw. des Heizelements sein. Ein Vorteil kann darin bestehen, dass die Handhabung erleichtert wird, insbesondere für weniger erfahrene Nutzern.

Ein weiterer Vorteil der vorgeschlagenen Lösung kann darin bestehen, dass die Betriebskosten reduziert werden. Je nach Material der zu verschweißenden bzw. zu verklebenden Materiallagen kann das Heizelement Korrosion oder schwer lösbaren Verschmutzungen ausgesetzt sein. Ein Vorteil der vorgeschlagenen Lösung kann darin bestehen, dass das Heizelement aus einem direkt bestromten, flachen, planaren Stahlblechzuschnitt kostengünstig herstellbar ist und als Verschleißteil kostengünstig ausgetauscht werden kann. Ein weiterer Vorteil kann darin bestehen, dass dank des geringeren Materialeinsatzes eine nachhaltigere Lösung bereitgestellt werden kann.

Ein weiterer Vorteil der vorgeschlagenen Lösung kann darin bestehen, dass die Betriebssicherheit verbessert werden kann, indem das Heizelement nur eine geringe thermische Masse aufweist. Ein weiterer Vorteil kann darin bestehen, dass das Heizelement aus einem direkt bestromten, flachen, planaren Stahlblechzuschnitt eine hohe Effizient bereitstellen kann, insbesondere eine geringe Verlustleistung beim Aufheizen und Betrieb. Ein weiterer Vorteil kann darin bestehen, dass eine schnelle Temperaturregelung und/oder hohe Schweißgeschwindigkeiten ermöglicht werden können.

Ein weiterer Vorteil der vorgeschlagenen Lösung kann darin bestehen, dass eine gleichmäßige Wärmeabgabe zu einer oberen Materiallage auf einer Oberseite des Heizelements und einer unteren Materiallage auf einer Unterseite des Heizelements bereitgestellt werden kann. Indem das Heizelement aus einem direkt bestromten, flachen, planaren Stahlblechzuschnitt besteht, ergibt sich keine bzw. keine nennenswerte Temperaturdifferenz zwischen der Ober- und Unterseite des Stahlblechzuschnitts. Ein Vorteil kann darin bestehen, dass eine Naht- bzw. Verbindungsqualität verbessert werden kann.

Im Betrieb können die erste Anschlusselektrode und die zweite Anschlusselektrode mit einer vorzugsweise regelbaren Strom- und/oder Spannungsquelle verbunden werden. Das Heizelement ist zwischen der ersten und zweiten Anschlusselektrode angeschlossen. Die elektrische Leistung wird dabei direkt im Stahlblechzuschnitt in Wärmeleistung umgesetzt. Der Stahlblechzuschnitt dient somit direkt als Heizleiter.

Im Rahmen der vorliegenden Offenbarung kann unter einem flachen, planaren Stahlblechzuschnitt ein planares Blechelement verstanden werden, insbesondere ein ungebogenes Blechelement. Im Rahmen der vorliegenden Offenbarung kann unter einem planaren bzw. ungebogenem Blechelement neben einem vollständig ebenen Blechelement auch ein Blechelement mit einer nur geringfügigen Krümmung, beispielsweise bezogen auf eine Ebene des Stahlblechs mit einer Krümmung von nicht mehr als 20°, insbesondere von nicht mehr als 10°, insbesondere von nicht mehr als 5° verstanden werden. Insbesondere kann das planare Blechelement aus einem einlagigen Stahlblechzuschnitt bestehen. Insbesondere ist der planare Stahlblechzuschnitt nicht gefaltet und nicht keilförmig ausgebildet. Hierbei können sich an einen nicht gefalteten Bereich, des Stahlblechzuschnitts, welcher als Heizelement verstanden wird, jedoch auch weitere Bereiche anschließen, welche die Anschlusselektroden oder Teile davon Bilden. Als Heizelement kann derjenige Teil des Stahlblechzuschnitts angesehen werden, welcher dazu eingerichtet ist, zumindest 70%, insbesondere zumindest 80%, insbesondere zumindest 90% einer Heizleistung der Kontaktheizvorrichtung bereitzustellen. Vorzugsweise ist der Stahlblechzuschnitt des Heizelements möglichst dünn, möglichst mechanisch flexibel und dazu eingerichtet eine möglichst gleichmäßige thermische Kontaktierung bereitzustellen.

Der Stahlblechzuschnitt des Heizelements kann in Längsrichtung mindestens einen Teilschnitt aufweisen. Insbesondere kann der Stahlblechzuschnitt des Heizelements eine planare U-förmige Geometrie aufweisen. Hierbei kann ein erster Schenkel des Stahlblechzuschnitts des Heizelements auf einer ersten Seite des Teilschnitts mit dem ersten Anschlusskontakt verbunden sein und ein zweiter Schenkel des Stahlblechzuschnitts des Heizelements auf einer zweiten Seite des Teilschnitts mit dem zweiten Anschlusskontakt verbunden sein.

Der Stahlblechzuschnitt des Heizelements, bzw. welcher das Heizelement bildet, kann folgendes aufweisen: einen ersten flachen, planaren Schenkel, welcher mit der ersten Anschlusselektrode verbunden ist; einen zweiten flachen, planaren Schenkel, welcher mit der zweiten Anschlusselektrode verbunden ist; wobei der erste Schenkel und der zweite Schenkel flach übereinander oder nebeneinander in der gleichen Ebene liegen ; und wobei der Stahlblechzuschnitt des Heizelements an einer Heizelementspitze einen Verbindungsbereich aufweist, welcher den ersten Schenkel und den zweiten Schenkel miteinander verbindet. Insbesondere können der erste Schenkel, der zweite Schenkel und der Verbindungsbereich in der gleichen Ebene liegen. Der erste und zweite Schenkel können dazu eingerichtet sein, dass sie sich längs entlang einer Vorschubrichtung der Kontaktheizvorrichtung zwischen den Materiallagen erstrecken. Der Verbindungsbereich an der Heizelementspitze kann sich quer zu den Schenkeln und quer zur Vorschubrichtung erstrecken.

In einer Weiterbildung kann das Heizelement dazu eingerichtet sein, in dem Verbindungsbereich eine gegenüber den Schenkeln erhöhte Temperatur bereitzustellen. Ein Vorteil dieser Lösung kann darin bestehen, dass eine für die Schweiß oder Klebeaufgabe vorteilhafte Wärmeverteilung bereitgestellt werden kann. Insbesondere kann der Verbindungsbereich in Vorschubrichtung nach hinten angeordnet sein, sodass die zu verbindenden Materiallagen unmittelbar bevor diese nach der Kontaktheizvorrichtung miteinander in Kontakt treten mit einer erhöhten Temperatur beaufschlagt werden. Hierdurch kann die Handhabung verbessert werden, da die Materiallagen nicht unnötig früh auf zu hohe Temperaturen gebracht werden und ggf. bereits verfrüht in an- bzw. aufgeschmolzenem Zustand an der Kontaktheizvorrichtung anhaften, beispielsweise in Arbeitspausen oder bei einer erstmaligen oder Neupositionierung. Die Erfinder haben erkannt, dass es anders als bei herkömmlichen voluminösen Heizkeilen mit hoher thermischer Masse mit der vorgeschlagenen Lösung möglich ist, flexibel vorteilhafte und örtlich variierende Wärmeverteilungen über eine Fläche des Stahlblechzuschnitts des Heizelements bereitzustellen.

Das Heizelement kann dazu eingerichtet sein, eine gleichmäßige Wärmeverteilung an einer insbesondere rückseitigen Kante, beispielsweise in einem Verbindungsbereich an einer Heizelementspitze des Heizelements bereitzustellen. Beispielsweise kann das Heizelement dazu eingerichtet sein, jedenfalls in einem Verbindungsbereich oder an der Heizelementspitze über eine Breite des Heizelements eine gleichmäßige Wärmeverteilung bereitzustellen. Unter einer gleichmäßigen Wärmeverteilung kann hierbei verstanden werden, dass Temperatur bzw. die im Betrieb abgegebene Wärme um nicht mehr als 40%, insbesondere um nicht mehr als 25%, insbesondere um nicht mehr als 15% variiert.

Der Verbindungsbereich kann Strukturierungen in Form von Einschnitten (bzw. Ausnehmungen oder Öffnungen) aufweisen, die dazu eingerichtet sind, den bestromten Querschnitt lokal im Vergleich zum unstrukturierten Querschnitt zu verkleinern, und damit die Heizleistung lokal zu vergrößern. Insbesondere kann der Stahlblechzuschnitt des Heizelements eine U-förmige Geometrie mit Strukturierungen im Verbindungsbereich und daran angrenzend aufweisen. Mit anderen Worten kann der Stahlblechzuschnitt des Heizelements eine U-förmige Geometrie aufweisen und im Bereich der Umlenkung Strukturierungen in Form von Einschnitten aufweist, welche den bestromten Querschnitt lokal im Vergleich zum unstrukturierten Querschnitt verkleinern, und damit die Heizleistung lokal vergrößern. Unter einem Einschnitt kann im Rahmen der vorliegenden Offenbarung auch eine Ausnehmung oder Öffnung verstanden werden. Hierbei muss der Einschnitt den Stahlblechzuschnitt nicht notwendigerweise vollständig durchdringen, sondern kann auch eine Vertiefung im Stahlblechzuschnitt umfassen. Auch eine Vertiefung kann den Querschnitt beeinflussen und eine Stromkonzentration und damit verändertes Heizverhalten bewirken. Die Einschnitte können beispielsweise als gestanzte oder gelaserte Ausnehmungen im Stahlblechzuschnitt gebildet sein. Ein Vorteil dieser Lösung kann in einer kostengünstigen Herstellung bestehen.

In einer Weiterbildung können die Einschnitte als längliche Ausnehmungen ausgebildet sein, insbesondere als längliche Ausnehmungen, in einem Winkel zur rückseitigen Kante der Heizelementspitze, insbesondere in einem Winkel zwischen 20° und 80°, insbesondere zwischen 30° und 60°. Dank der länglichen Ausnehmungen kann die Stromverteilung vorteilhaft beeinflusst werden. Ein Vorteil dieser Lösung kann in einer vorteilhaften Wärmeverteilung bestehen.

Die Einschnitte können zumindest abschnittsweise symmetrisch angeordnet sein. Insbesondere können die Einschnitte baumförmig aufgefächert angeordnet sein. Eine baumförmige Struktur von Einschnitten kann Verästelungen aufweisen. Ein Vorteil dieser Lösung kann in einer verbesserten Wärmeverteilung, insbesondere einer gleichmäßigeren Wärmeverteilung bestehen, welche von dem Stahlblechzuschnitt des Heizelements bereitgestellt werden kann.

Die Einschnitte können mehrere parallele Schlitze unterschiedlicher Länge aufweisen. Ein Vorteil dieser Lösung kann in einer einfachen Herstellbarkeit bestehen, wobei die Temperaturverteilung auf einfache Art und Weise beeinflusst werden kann. Alternativ können auch Schlitze gleicher Länge oder auch punktförmige Ausnehmungen verwendet werden. Alternativ oder zusätzlich kann hierbei eine Verteilung bzw. Dichte der Einschnitte über dem Stahlblechzuschnitt des Heizelements derart angepasst sein, dass eine vorgegebene Temperaturverteilung bereitgestellt wird, insbesondere dass eine gleichmäßige Temperaturverteilung im Bereich der Heizelementspitze bzw. einem Verbindungsbereich bereitgestellt wird. Optional kann zumindest einer der Schlitze mit einem Teilschnitt in Längsrichtung zwischen Schenkeln verbunden sein. Hierdurch kann der Strom zumindest teilweise aus einem Mittenbereich in einen Randbereich umgelenkt werden und eine verbesserte Verteilung der Heizleistung ermöglichen.

Die erste und/oder zweite Anschlusselektrode können durch Extensionen des Stahlblechzuschnitts gebildet sein. Die erste und/oder zweite Anschlusselektrode bzw. Extensionen könne seitlich über das Heizelement hinausragen, insbesondere quer zu einer Vorschubrichtung zum thermischen Verbinden der Materiallagen. Ein Vorteil dieser Lösung kann darin bestehen, dass die Kontaktheizvorrichtung kostengünstig hergestellt werden kann. Ferner kann ein Vorteil dieser Lösung darin bestehen, dass die Kontaktheizvorrichtung auf einfache Art und Weise mechanisch fixiert und (seitlich) zwischen die Materiallagen eingeführt werden kann. Die erste und zweite Anschlusselektrode können seitlich am Heizelement und auf der gleichen Seite des Heizelements angeordnet sein. Dies ermöglicht ein einfaches seitliches Einführen zwischen der obere und der untere Materiallage.

In einer Weiterbildung können die Extensionen des Stahlblechzuschnitts derart ausgebildet sein, dass die erste und/oder zweite Anschlusselektrode gegenüber einer Ebene, in welcher der flachen, planaren Stahlblechzuschnitt des Heizelements liegt, erhöht angeordnet ist; insbesondere wobei die erste Anschlusselektrode und die zweite Anschlusselektrode in unterschiedlicher Höhe angeordnet sind. Eine erhöhte Anordnung kann dafür sorgen, dass ein Abstand zu den Materiallagen hergestellt wird und Platz für eine Aufnahme zur Befestigung der Kontaktheizvorrichtung bereitgestellt wird. Ein weiterer Vorteil kann in einem kompakten Aufbau bestehen. Ein Vorteil der Anordnung der ersten und zweiten Anschlusselektrode kann darin bestehen, dass eine falsche Anbringung vermieden werden kann.

Der Stahlblechzuschnitt des Heizelements kann eine Dicke zwischen 0,1 mm und 1,5 mm, insbesondere zwischen 0,5 mm und 1,0 mm, insbesondere zwischen 0,7 mm und 0,9 mm aufweisen. Ein Vorteil dieser Ausgestaltung kann in einem verbesserten Materialfluss der zu verbindenden Materiallagen bestehen, wobei gleichzeitig eine ausreichende mechanische Stabilität bereitgestellt wird. Es kann eine gute Heizleistung bereitgestellt werden, wobei das Heizelement hinreichend flexibel, aber noch nicht zu empfindlich ist. Ein weiterer Vorteil dieser Ausgestaltung kann darin bestehen, dass das Heizelement gut zwischen die zu verbindenden Materiallagen eingeführt werden kann. In einer Weiterbildung weist der Stahlblechzuschnitt eine einheitliche Dicke bzw. einheitliche Materialstärke auf. Hierdurch kann die Herstellung vereinfacht werden. Optional kann die Heizkeilspitze eine Phase aufweisen. Hierdurch kann sowohl ein mechanischer Übergang der Materiallagen geglättet werden als auch eine Stromdichte im Bereich der Heizkeilspitze erhöht werden.

Der Stahlblechzuschnitt des Heizelements kann mechanisch flexibel sein. Insbesondere kann der Stahlblechzuschnitt des Heizelements dazu ausgebildet sein, Bodenunebenheiten auszugleichen. Aufgrund der Flexibilität des Heizelements, welches als flacher, planarer Stahlblechzuschnitt ausgebildet ist, kann dieses bei Bodenunebenheiten ausgleichen. Hierdurch kann eine verbesserte Nahtqualität bereitgestellt werden. Beispielsweise kann der Stahlblechzuschnitt des Heizelements dazu eingerichtet sein, in Längsrichtung eine in Längsrichtung Biegung um 20°, insbesondere um 10°, insbesondere um 5° zu ermöglichen. Abweichend von herkömmlichen starren Heizkeilen, insbesondere Heizkeilen aus einem massiven starren Grundkörper in welchen eine oder mehrere Heizpatronen eingeführt werden, wird also vorgeschlagen, dass der Stahlblechzuschnitt des Heizelements mechanisch flexibel ausgebildet sein kann. Ein weiterer Vorteil dieser Ausgestaltung kann darin bestehen, dass das Heizelement bzgl. einer Positionseinstellung bzw. Anbringung an einem Schweißautomaten fehlertoleranter ist. Dies kann die Anwendung auch für ungeübte Nutzer erleichtern.

Der Stahlblechzuschnitt des Heizelements kann am rückseitigen Ende bzw. an der Heizkeilspitze eine Phase aufweisen. Beispielsweise kann ein gewalztes, flach zulaufendes Ende vorgesehen sein, welches ebenfalls kostengünstig herstellbar ist. Dies kann ein Zusammenführen der Materiallagen weiter verbessern.

Zusätzlich zu dem Stahlblechzuschnitt, welcher das Heizelements bildet, kann ein, insbesondere einstückig ausgebildeter, weiterer Abschnitt des Stahlblechzuschnitts vorgesehen sein, wobei der weitere Abschnitt des Stahlblechzuschnitts an einem rückseitigen Ende einen Saum aufweist, welcher durch eine Faltung oder Doppelung des weiteren Abschnitts des Stahlblechzuschnitts gebildet ist. Mit anderen Worten, kann also ein weiterer Abschnitt des Stahlblechzuschnitts vorgesehen sein, welcher eine mechanische Stabilität bei gleichzeitig kostengünstiger Fertigung verbessern kann. Ein weiterer Vorteil kann darin bestehen, dass eine Faltung quer zu einer Vorschubrichtung und an einer Vorderseite in Vorschubrichtung beim Verbinden der Materiallagen eine abgerundete Vorderseite bereitstellen kann. Hierdurch kann das Gleiten zwischen Materiallagen verbessert werden, da eine harte bzw. scharfe Kante an der Spitze vermieden werden kann. Diese könnte an einer Materiallage hängen bleiben und die Materiallage ggf. beschädigen. Eine solche harte Kante kann sich beispielsweise bei kostengünstiger Fertigung mit Stanzwerkzeugen ergeben.

Das Heizelement kann eingerichtet sein für eine Betriebstemperatur zwischen 200°C und 700°C, insbesondere zwischen, 300°C und 600°C. Ein Vorteil dieser Lösung kann darin bestehen, dass eine gute Verbindung zwischen den Materiallagen bereitgestellt werden kann, wobei gleichzeitig das Risiko einer temperaturbedingten Verformung des Stahlblechzuschnitts des Heizelements vermieden oder zumindest reduziert werden kann.

Die Kontaktheizvorrichtung kann eingerichtet sein für eine Stromstärke zwischen 50A und 700A, insbesondere zwischen 100A und 500A. Beispielsweise kann die Kontaktheizvorrichtung in einem Anwendungsfall als Überlappschweißautomat bei einer Spannung von 5 V und einer Stromstärke von bis zu 300 A betrieben werden. In einem Anwendungsfall zum vollflächigen Verschweißen von Bitumenbahnen kann beispielsweise eine Spannung von bis zu 43 V und eine Stromstärke von bis zu 300 A vorgesehen sein.

Der Stahlblechzuschnitt kann eine elektrisch leitfähige, temperatur- und korrosionsbeständigen Legierung aufweisen, insbesondere Edelstrahl. Beispielsweise kann der Stahlblechzuschnitt aus Edelstahl 1.4301 bestehen. Ein Vorteil dieser Ausgestaltung kann darin bestehen, dass auch Materiallagen aus Materialen wie beispielsweise PVC verarbeitet werden können. Anders als bei den im Stand der Technik vorgeschlagenen Heizkeilen aus Keramik ist jedoch weiterhin eine flexible Anpassung an den Untergrund möglich.

Optional kann die Kontaktheizvorrichtung mehrere zwischen den Anschlusselektroden angeschlossene Heizelemente aufweisen. Jedes der Heizelemente kann als direkt bestromter, flacher, planarer Stahlblechzuschnitt ausgebildet sein. Insbesondere können die mehreren Heizelemente einen gemeinsamen Stahlblechzuschnitt aufweisen. Hierdurch kann eine von der Kontaktheizvorrichtung abzudeckende Breite vergrößert werden, beispielsweise zum vollflächigen Verschweißen von Bitumenbahnen. Optional kann die Kontaktheizvorrichtung mehrere, in Serie zusammengesetzte, U-förmigen Stahlblechzuschnitten aufweisen, welche optional jeweils um 180° gegeneinander verdreht sein können. Beispielhafte Anwendungsfälle sind vollflächiges oder randseitiges Verschweißen von Bitumenbahnen oder Teilstücken.

Gemäß einem weiteren Aspekt der vorliegenden Offenbarung wird ein Verfahren zur Bestimmung einer Temperatur bzw. einer Temperaturverteilung einer Kontaktheizvorrichtung vorgeschlagen mit den Schritten: Messen von jeweiligen Spannungsabfällen über die jeweiligen Heizelemente, Bestimmen von elektrischen, temperaturabhängigen Teilwiderständen der jeweiligen Heizelemente basierend auf den gemessenen Spannungsabfällen; und Bestimmen einer Temperaturverteilung über eine Breite der Kontaktheizvor-richtung basierend auf den Teilwiderständen der jeweiligen Heizelemente.

Die vorstehend für den ersten Aspekt der Erfindung ausführlich beschriebenen Vorteile gelten für die weiteren Aspekte der Erfindung entsprechend.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Beispielhafte Ausführungsformen der Erfindung sind in nachfolgenden Zeichnungen dargestellt und werden in der nachfolgenden Beschreibung näher erläutert.
- Fig. 1: zeigt eine perspektivische Darstellung eines bodennahen Schweißautomaten mit einer Kontaktheizvorrichtung;
- Fig. 2: zeigt einen vergrößerten Ausschnitt einer perspektivischen Darstellung mit der Kontaktheizvorrichtung;
- Fig. 3: zeigt einen weiteren vergrößerten Ausschnitt einer perspektivischen Darstellung mit der Kontaktheizvorrichtung aus einer anderen Betrachtungsposition;
- Fig. 4: zeigt eine perspektivische Darstellung einer Kontaktheizvorrichtung;
- Fig. 5: zeigt eine Draufsicht einer Kontaktheizvorrichtung;
- Fig. 6: zeigt eine Wärmeverteilung einer Ausgestaltung einer Kontaktheizvorrichtung;
- Fig. 7: zeigt eine Wärmeverteilung einer weiteren Ausgestaltung einer Kontaktheizvorrichtung;
- Fig. 8: zeigt eine Draufsicht einer weiteren Ausgestaltung einer Kontaktheizvorrichtung;
- Fig. 9: zeigt eine weitere Ausgestaltung einer Kontaktheizvorrichtung, insbesondere zum flächigen Verschweißen von Bitumenbahnen;
- Fig. 10: zeigt eine perspektivische Darstellung eines Schweißautomaten mit angehobener Andruckrolle;
- Fig. 11: zeigt eine perspektivische Darstellung des Schweißautomaten aus Fig. 10 mit abgesenkter Andruckrolle;
- Fig. 12: zeigt ein insbesondere batteriebetriebenes Handgerät mit einer Kontaktheizvorrichtung;
- Fig. 13: zeigt eine Draufsicht einer Kontaktheizvorrichtung;
- Fig. 14: zeigt ein Flussdiagramm eines Verfahrens zum thermisch induzierten, stoffschlüssigen Verbinden von flachen, flexiblen Materiallagen mit einer Kontaktheizvorrichtung.

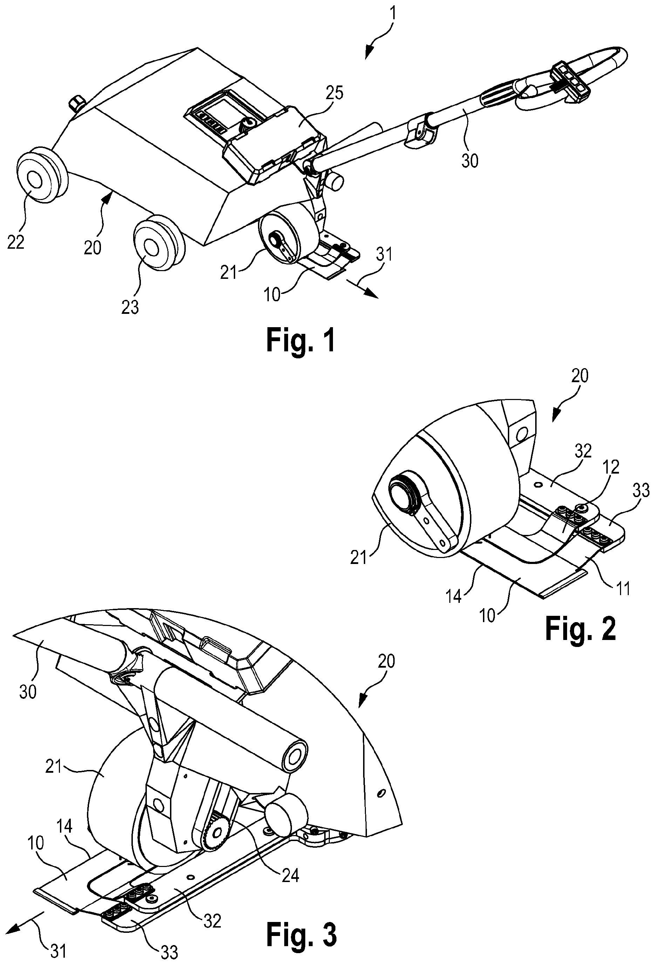

Figur 1 zeigt eine perspektivische schematische Darstellung eines beispielhaften Verbindungsautomaten bzw. Schweißautomaten 1 zum thermisch induzierten stoffschlüssigen Verbinden von schweiß- und/oder klebbaren flachen flexiblen Materiallagen miteinander, die als Materialbahn, Materialband und/oder Materialstück ausgebildet und sich zumindest teilweise überdeckend angeordnet sind. Im Rahmen der vorliegenden Offenbarung wird eine Verbindungsautomat auch als Schweißautomat bezeichnet und umgekehrt. Der Schweißautomat 1 weist eine als Kontaktheizvorrichtung 10 ausgebildete Heizeinrichtung und ein Fahrgestell 20 mit einem Führungsstab 30 auf.

Fig. 2 und Fig. 3 zeigen vergrößerte Ausschnitte des Schweißautomaten 1 mit der Kontaktheizvorrichtung 10 aus Fig. 1 aus unterschiedlichen Betrachtungspositionen.

Eine Arbeitsfahrrichtung des Schweißautomaten 1 ist mit Bezugszeichen 31 bezeichnet. Die Arbeitsfahrrichtung 31 bezeichnet hierbei eine Vorschubrichtung, in welcher der Schweißautomat im Betrieb zum thermisch induzierten Verbinden von Materiallagen miteinander entlang der überlappenden Materiallagen bzw. Materialbahnen geführt wird. Die Kontaktheizvorrichtung 10 wird hierbei in einem Überlappungsbereich zwischen eine obere Materiallage und eine untere Materiallage (nicht dargestellt) eingeführt. Dadurch kann die Kontaktheizvorrichtung eine Unterseite der oberen Materiallage und eine Oberseite der unteren Materiallage oder einen darauf angebrachten Klebstoff erhitzen und insbesondere zumindest teilweise plastifizieren bzw. anschmelzen.

Im Betrieb ist die obere Materiallage demnach zumindest abschnittsweise auf einer Oberseite der Kontaktheizvorrichtung 10 angeordnet. Die untere Materiallage ist zumindest abschnittsweise auf einer Unterseite der Kontaktheizvorrichtung 10 angeordnet. Zum thermisch induzierten Verbinden wird die Kontaktheizvorrichtung 10 entlang des Überlappungsbereichs zwischen den Materiallagen geführt. In dem in Fig. 1 gezeigten Beispiel befindet sich die untere Materiallage beispielsweise in Vorschubrichtung 31 auf einer linken Seite und die zumindest abschnittsweise darüber angeordnete obere Materiallage in Vorschubrichtung 31 auf einer rechten Seite. Zumindest in demjenigen Bereich, in welchem die Materiallagen verbunden werden sollen, überlappen sich die obere und untere Materiallage zumindest teilweise.

Das Fahrgestell 20 weist ferner eine Andruckrolle 21 auf, welche dazu eingerichtet ist, die Materialbahnen in Arbeitsrichtung hinter der Kontaktheizvorrichtung 10 mit Druck zu beauftragen. Die Andruckrolle 21 kann auch gleichzeitig als Antriebsrolle ausgeführt sein, welche den Schweißautomat 1 automatisch antreibt. Beispielsweise kann die Andruckrolle 21, wie in Fig. 3 dargestellt, über einen Riemenantrieb 24 angetrieben werden. Ein Antriebsmotor für den Riemenantrieb 24 kann geschützt in einem Gehäuse des Fahrgestells 20 angeordnet sein. Alternativ kann eine optionale separate Antriebsrolle vorgesehen sein. Im gezeigten Ausführungsbeispiel weist das Fahrgestell 20 ferner weitere Laufrollen 22, 23 auf. Es versteht sich, dass auch andere Ausgestaltungen des Fahrgestells 20 und andere Anordnungen der Kontaktheizvorrichtung 10 am Fahrgestell 20 denkbar sind. Beispielsweise kann die Kontaktheizvorrichtung statt in Vorschubrichtung 31 auf einer Vorderseite auch auf einer Rückseite des Fahrgestells 20 oder in Vorschubrichtung 31 zwischen vorderen Laufrollen 22, 23 und einer nachfolgenden Andruckrolle 21 angeordnet sein. Ein Vorteil der in Fig. 1 bis Fig. 3 gezeigten Anordnung besteht jedoch daran, dass ein Nutzer eine korrekte Positionierung und Führung der Kontaktheizvorrichtung 10 zwischen den Materiallagen leicht kontrollieren und überwachen kann.

Der in Fig. 1 bis 3 gezeigte Schweißautomat 1 ist als bodennaher Schweißautomat ausgeführt. Sogenannte bodennahe Schweißautomaten drücken einseitig mit einer Andruckrolle 21 auf den auf- bzw. angeschmolzenen Überlappungsbereich der auf einem (festen) Untergrund platzierten Materiallagen. Der auf die Verbindungsstelle wirkende Druck hängt daher vom Eigengewicht des Schweißautomaten 1 und etwaigen Zusatzgewichten 25 ab. Ein Vorteil der Ausgestaltung als bodennaher Schweißautomat besteht darin, dass keine Gegenrolle erforderlich ist. Hierdurch kann die Handhabung vereinfacht werden.

Die Kontaktheizvorrichtung 10 zum thermisch induzierten stoffschlüssigen Verbinden von schweiß- und/oder klebbaren flachen flexiblen Materiallagen miteinander, die als Materialbahn, Materialband und/oder Materialstück ausgebildet und sich zumindest teilweise überdeckend angeordnet sind, weist eine ersten Anschlusselektrode 11 und eine zweiten Anschlusselektrode 12 sowie ein zwischen den Anschlusselektroden angeschlossenes Heizelement 14 auf. Dass Heizelement 14 ist als direkt bestromter, flacher, planarer Stahlblechzuschnitt ausgebildet. Beispielhafte Ausgestaltungen der Kontaktheizvorrichtung 10 werden mit Bezug auf die nachfolgenden Figuren näher erläutert.

Ein Schweißautomat 1 gemäß einem Aspekt der vorliegenden Offenbarung kann einen oder mehrere Aufnahmearme für die Kontaktheizvorrichtung 10 aufweisen. In dem in Fig. 1 bis Fig. 3 gezeigten Beispiel weist der Schweißautomat 1 einen ersten Aufnahmearm 32 und einen zweiten Aufnahmearm 33 auf. Der erste Aufnahmearm 32 ist eingerichtet zur Aufnahme der ersten Anschlusselektrode 11 der Kontaktheizvorrichtung 10. Der zweite Aufnahmearm 33 ist eingerichtet zur Aufnahme der zweiten Anschlusselektrode 12 der Kontaktheizvorrichtung. Ferner können der erste und zweite Aufnahmearm 32, 33 dazu eingerichtet sein, eine Stromversorgung des Heizelements 14 der Kontaktheizvorrichtung 10 über die erste und zweite Anschlusselektrode 11, 12 bereitzustellen. Mit anderen Worten können die Aufnahmearme 31, 32 sowohl der mechanischen Befestigung als auch der Stromversortung der Kontaktheizvorrichtung 10 dienen.

Wie in Fig. 1 bis Fig. 3 gezeigt, können die Aufnahmearme 31, 32 derart angeordnet und dazu eingerichtet sein, die Kontaktheizvorrichtung 10 in Fahrtrichtung 31 vor einer Andruckrolle 21 des Fahrgestells 20 des Schweißautomaten 1 zu halten. Die Kontaktheizvorrichtung ist demnach unmittelbar vor derjenigen Position angeordnet, an welcher die zuvor mit der Kontaktheizvorrichtung erhitzten Materiallagen durch die Andruckrolle 21 mit Druck beaufschlagt und miteinander verbunden werden. Die Aufnahmearme 32, 33 können hierbei in einer Ebene übereinander liegend angeordnet sein. Zwischen den Aufnahmearmen 32, 33 kann ein elektrischer Isolator vorgesehen sein. Diese Anordnung kann eine hohe Stabilität gewährleisten, wobei gleichzeitig ein Kurzschluss zwischen den stromführenden Aufnahmearmen 32, 33 vermieden werden kann. Ein weiterer Vorteil der Ausgestaltung der Befestigung als Aufnahmearme 32, 33 kann darin bestehen, dass eine gewisse mechanische Flexibilität bereitgestellt werden kann. Beispielsweise können Unebenheiten des Untergrunds oder der zu verbindenden Materiallagen in einer Höhenrichtung ausgeglichen werden.

Der Schweißautomat 1 kann eine an die Antriebsgeschwindigkeit gekoppelte Regelung der Heizleistung aufweisen, welche die Heizleistung erhöht, wenn die Geschwindigkeit erhöht wird und umgekehrt. Dank der geringen thermischen Masse der Kontaktheizvorrichtung 10 kann eine besonders schnelle Regelung der Heizleistung und besonders schnelle Anpassung der Temperatur bereitgestellt werden. Der Schweißautomat 1 kann beispielweise dazu eingerichtet sein, eine Heizleistung zwischen 250 W und 3600 W, insbesondere zwischen 500 W und 2500 W, insbesondere zwischen 1000 W und 2000 W, beispielsweise von 1500 W bereitzustellen. Der Schweißautomat 1 kann eingerichtet sein für eine Vorschubgeschwindigkeit zwischen 5 m/min und 30 m/min, insbesondere zwischen 10 m/min und 25 m/min, beispielsweise für eine Vorschubgeschwindigkeit von bis zu 20 m/min. Eine Breite des Heizelements (im Betrieb quer zur Vorschubrichtung) kann zwischen 10 mm und 100 mm liegen, insbesondere zwischen 15 mm und 75 mm, insbesondere zwischen 20 mm und 50 mm. Beispielhafte Breiten für das Heizelement sind 20 mm, 30 mm, 40 mm und 50 mm. Ein Vorteil dieser Ausgestaltung kann darin bestehen, dass das Heizelement zwar mechanisch flexibel aber noch hinreichend stabil ist.

Nachfolgend werden beispielshafte Ausgestaltungen der Kontaktheizvorrichtung 10 beschrieben.

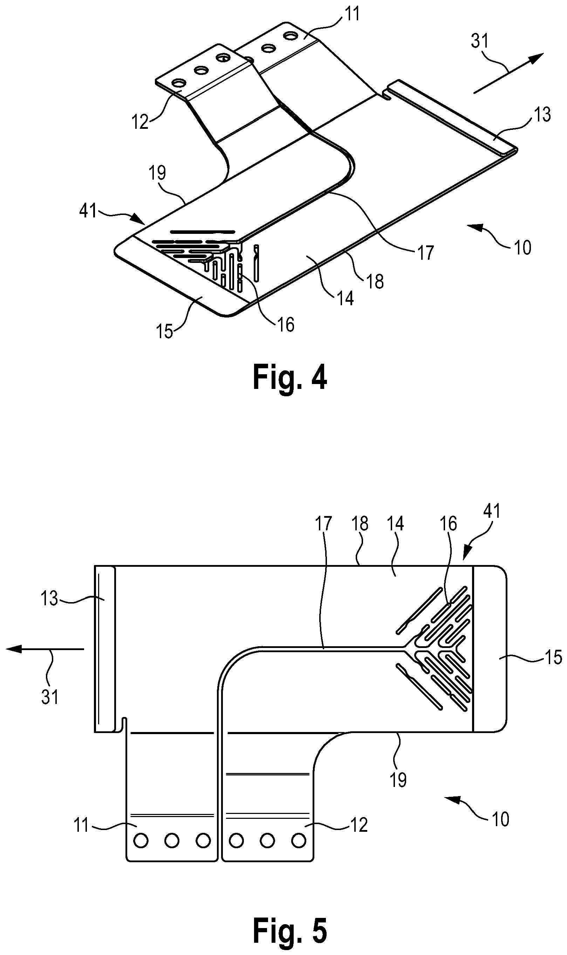

Fig. 4 und Fig. 5 zeigen eine perspektivische Darstellung und eine Draufsicht einer Ausgestaltung einer Kontaktheizvorrichtung 10. Die Kontaktheizvorrichtung 10 weist eine erste Anschlusselektrode 11 und eine zweite Anschlusselektrode 12 sowie ein zwischen den Anschlusselektroden 11, 121, angeschlossenen Heizelement 14 auf. Das Heizelement 14 ist als direkt bestromter, flacher, planarer Stahlblechzuschnitt ausgebildet.

Der Stahlblechzuschnitt des Heizelements ist mechanisch flexibel und kann insbesondere dazu ausgebildet sein Bodenunebenheiten auszugleichen. Der Stahlblechzuschnitt des Heizelements weist eine Dicke zwischen 0,1 mm und 1,5 mm, insbesondere zwischen 0,5 mm und 1,0 mm, insbesondere zwischen 0,7 mm und 0,9 mm auf.

Wie in Fig. 4 und Fig. 5 gezeigt, kann der Stahlblechzuschnitt des Heizelements 14 in Längsrichtung mindestens ein Teilschnitt 17 aufweisen. Insbesondere weist der Stahlblechzuschnitt des Heizelements eine planare U-förmige Geometrie auf. Hier kann der Stahlblechzuschnitt des Heizelements 14 folgendes aufweisen: einen ersten flachen, planaren Schenkel 18, welcher mit der ersten Anschlusselektrode 11 verbunden ist; einen zweiten flachen, planaren Schenkel 19, welcher mit der zweiten Anschlusselektrode 12 verbunden ist; wobei der erste Schenkel 18 und der zweite Schenkel 19 flach nebeneinander in der gleichen Ebene liegen. Es ist jedoch auch denkbar, dass der erste Schenkel 18 und der zweite Schenkel 19 flach übereinander angeordnet sind. An einer Heizelementspitze weist der Stahlblechzuschnitt einen Verbindungsbereich 41 auf, welcher den ersten Schenkel 18 und den zweiten Schenkel 19 miteinander verbindet. Mit anderen Worten wird ein über die erste Anschlusselektrode 11 und die zweite Anschlusselektrode 12 bereitgestellter Strom über den ersten Schenkel 18 und den zweiten Schenkel 19 in den Verbindungsbereich 41 des Heizelements 14 geführt. Als Heizelement kann derjenige Teil des Stahlblechzuschnitts angesehen werden, welcher dazu eingerichtet ist, zumindest 70%, insbesondere zumindest 80%, insbesondere zumindest 90% einer Heizleistung der Kontaktheizvorrichtung bereitzustellen. Je nach Ausgestaltung tragen Abschnitte des Stahlblechzuschnitts, welche eine Verbindung zu den Anschlusskontakten 11, 12 herstellen, hingegen nur zu einem geringeren Anteil zur Heizleistung bei.

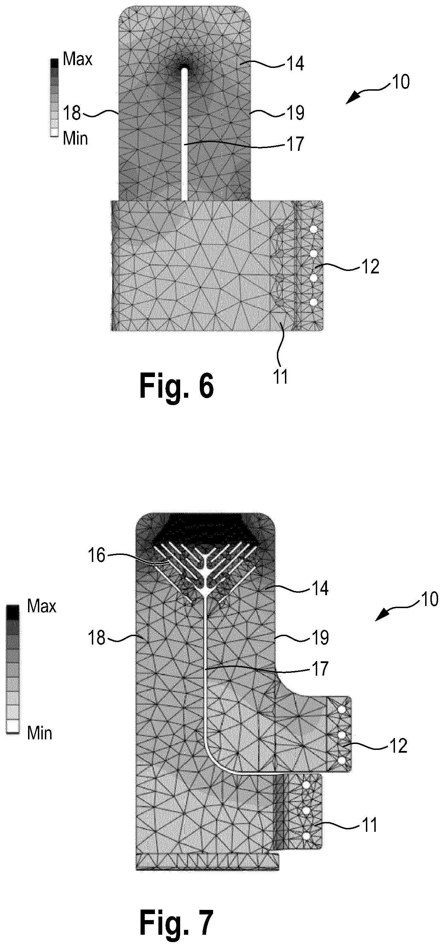

Die Kontaktheizvorrichtung 10 mit dem Heizelement 14 kann, wie eingangs beschrieben, dazu eingerichtet sein, in dem Verbindungsbereich 41 eine gegenüber den Schenkeln 18 ,19 erhöhte Temperatur bereitzustellen. In Fig. 6 und Fig. 7 sind beispielhafte Temperaturverteilungen von unterschiedlichen Ausgestaltungen gezeigt. Wie aus Figur 6 ersichtlich, ergibt sich in dem Verbindungsbereich 41 an einem Übergang von den Schenkeln eine erhöhte Temperatur. Die Temperaturverteilung kann jedoch vorzugsweise dadurch beeinflusst werden, dass der Verbindungsbereich 41 Strukturierungen 16 aufweist, welche dazu eingerichtet sind, die Temperaturverteilung weiter zu beeinflussen. Insbesondere kann der Verbindungsbereich 41 Strukturierungen 16 in Form von Einschnitten bzw. Ausnehmen oder Öffnungen aufweisen, die dazu eingerichtet sind, den bestromten Querschnitt lokal im Vergleich zum unstrukturierten Querschnitt (siehe Fig. 6) zu verkleinern und damit die Heizleistung lokal zu vergrößern (siehe Fig. 7). Die Einschnitte können beispielsweise als gestanzte oder gelaserte Ausnehmung im Stahlblechzuschnitt gebildet sein.

Fig. 7 zeigt eine beispielhafte Wärmeverteilung entsprechend der Ausgestaltung in Fig. 4 und Fig. 5. Die Strukturierungen 16 verändern die Stromverteilung und damit auch die Heizleistung dahingehend, dass eine Stromdichte im Verbindungsbereich, welcher bezogen auf die Fahrtrichtung 31 an einer rückseitigen Kante angeordnet ist, einerseits erhöht ist und damit höhere Temperaturen bereitgestellt werden und andererseits auch gleichmäßiger über eine Breite des Heizelements 14 der Kontaktheizvorrichtung verteilt ist.

Wie in Fig. 4, Fig. 5 und Fig. 7 gezeigt, können die Einschnitte als längliche Ausnehmungen ausgebildet sein, insbesondere als längliche Ausnehmungen in einem Winkel zur rückseitigen Kante der Heizelementspitze, insbesondere in einem Winkel zwischen 20° und 80°, insbesondere zwischen 30° und 60°.

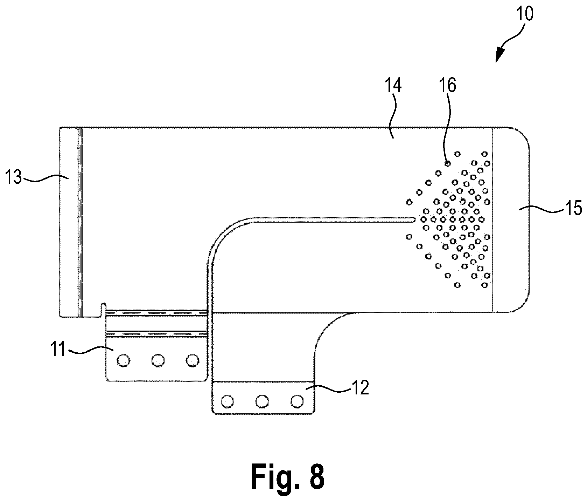

Es versteht sich, dass die Strukturierungen in Form von Einschnitten (bzw. Ausnehmungen oder Öffnungen), die dazu eingerichtet sind, den bestromten Querschnitt lokal im Vergleich zum unstrukturierten Querschnitt zu verkleinern, und damit die Heizleistung lokal zu vergrößern, nicht auf längliche Einschnitte beschränkt sind, sondern auch anderen Formen vorgesehen sein können. In Fig. 8 ist beispielsweise eine weitere Ausgestaltung einer Kontaktheizvorrichtung 10 gezeigt, wobei Ausnehmungen in Form runden Öffnungen, vorgesehen sind, wobei die Anordnung und Dichte der Ausnehmungen dazu eingerichtet ist, eine vorgegebene Temperaturverteilung zu bewirken.

Wie in Fig. 4, Fig. 5, Fig. 7 und Fig. 8 gezeigt, können die Einschnitte zumindest abschnittsweise symmetrisch angeordnet sein. Insbesondere können die Einschnitte baumförmig aufgefächert angeordnet sein. Hierdurch kann eine Verteilung des Stroms auch in äußere Bereiche des Stahlblechzuschnitts bewirkt werden. Ein Vorteil dieser Ausgestaltung ist eine gleichmäßigere Temperaturverteilung über eine Breite des Heizelements 10.

In dem in Fig. 4 gezeigten Ausführungsbeispiel sind die erste und/oder zweite Anschlusselektrode 11,12 durch Extensionen des Stahlblechzuschnitts gebildet. Die Extensionen ragen seitlich über das Heizelement 14 hinaus, insbesondere quer zu einer Vorschubrichtung 31. Die erste und zweite Anschlusselektrode 11, 12 sind seitlich am Heizelement und auf der gleichen Seite des Heizelements angeordnet. Insbesondere können die Extensionen des Stahlblechzuschnitts derart ausgebildet sind, dass die erste und/oder zweite Anschlusselektrode 11, 12 gegenüber einer Ebene, in welcher der flachen, planaren Stahlblechzuschnitt des Heizelements 14 liegt, erhöht angeordnet sind; insbesondere wobei die erste Anschlusselektrode 11 und die zweite Anschlusselektrode 12 in unterschiedlicher Höhe angeordnet sind. Dies kann eine vorteilhafte Befestigung, wie beispielsweise an einem ersten und zweiten Aufnahmearm 32, 33 wie in Fig. 1 bis Fig. 3 gezeigt. Dies gilt für das in Fig. 8 gezeigte Ausführungsbeispiel entsprechend.

Bezüglich der Anschlusselektroden 11, 12 ist in Fig. 6 eine weitere mögliche Ausgestaltung gezeigt, wobei die erste und zweite Anschlusselektrode ebenfalls durch Extensionen des Stahlblechzuschnitts gebildet sind und sich jedenfalls teilweise überlappen bzw. übereinander angeordnet sind. Derjenige Bereich des Stahlblechzuschnitts, welcher das Heizelement bildet, ist weiterhin als direkt bestromter, flacher, planarer Stahlblechzuschnitt ausgebildet. Lediglich die nicht wesentlich zur Heizleistung beitragenden Abschnitte der Anschlusselektroden befinden sich abschnittsweise außerhalb einer flachen Ebene des Heizelements.

Optional kann an der Spitze bzw. der in Arbeitsfahrrichtung 31 rückseitigen Kante der Kontaktheizvorrichtung 10 eine Phase 15 vorgesehen sein, wie beispielsweise in Fig. 5 und Fig. 8 gezeigt. Diese ermöglicht, dass das die Kontaktheizvorrichtung 10 mit dem Heizelement 14 sehr nahe an die Andruckrolle 21 eingestellt werden kann, wie in Fig. 1 bis Fig. 3 gezeigt. Es kann eine Phase 15 an einer Ober- oder Unterseite vorgesehen sein oder auch eine Doppelphase an Oper- und Unterseite.

An einer in Arbeitsfahrrichtung 31 vorderseitigen Kante der Kontaktheizvorrichtung 10 kann ein Saum 13 vorgesehen sein. Der Saum 13 kann beispielsweise durch ein Umbiegen bzw. eine Doppelung eines Abschnitts des Stahlblechzuschnitts gebildet werden. Dadurch hängt der Keil bei Lagensprüngen nicht an. Ferner kann eine mechanische Stabilität verbessert werden, wobei die Flexibilität insbesondere in Arbeitsfahrrichtung weiterhin erhalten bleibt.

Mit anderen Worten kann gemäß einem Aspekt der vorliegenden Offenbarung eine Kontaktheizvorrichtung 10 aus einem flachen Stahlblechzuschnitt, von typischerweise rechteckiger Form aus einer elektrisch leitfähigen, temperatur- und korrosionsbeständigen Legierung wie z. B. aus Edelstahl 1.4301, bestehen. Die Verwendung eines flachen Stahlblechs führt zu einer hohen, mechanischen Flexibilität der Kontaktheizvorrichtung 10, was sich positiv auf die thermische Kontaktierung zwischen der Kontaktheizvorrichtung 10 und Schweißmaterial auswirkt, welche essenziell ist für eine gute Schweißqualität. Durch die Flexibilität können Unebenheiten oder leichte Fehleinstellungen bzw. -manipulationen ausgeglichen werden. In Längsrichtung kann der Stahlblechzuschnitt einen Teil-Schnitt 17 aufweisen, so dass eine U-förmige Geometrie entsteht, wie in Fig. 4 gezeigt. An den beiden Enden des «U» sind elektrische Kontakte 11, 12 vorgesehen, zur elektrischen Bestromung des Stahlblechs. Gleichzeitig dienen diese auch als mechanische Fixierung. Die elektrische Leistung wird dabei direkt im Stahlblech in Wärmeleistung umgesetzt. Der Stahlblechzuschnitt dient somit als Heizleiter.

Die U-Form hat einerseits den Vorteil, dass das Verhältnis zwischen Heizleiterlänge und -breite bei gleicher Fläche vergrößert wird und damit auch der elektrische Widerstand, was wiederum die elektrische Speisung vereinfacht. Je höher der Widerstand, desto kleiner die benötigte Stromstärke, um eine bestimmte Heizleistung zu erreichen. Unter anderem kann dadurch der Leitungsquerschnitt der Zuführung reduziert werden und dadurch Kosten gespart werden. Andererseits vereinfacht die U-Form den elektrischen und mechanischen Anschluss an eine Schweißvorrichtung, wie in Fig. 1 gezeigt, ohne den Schweißprozess zu stören.

Die Bestromung des U-förmigen Heizleiters führt zu einer Erwärmung desselben. Für die Schweißanwendung ist es von Vorteil, wenn der Heizleiter über dessen Breite möglichst gleichmäßig erwärmt wird. Im Bereich der Umlenkung, auch als Verbindungsbereich 14 bezeichnet, wäre die Stromdichte allerdings am Innenradius grösser als am Außenradius, da der Strompfad am Innenradius kürzer und der lokale Widerstand somit kleiner wäre («der Strom nimmt den Weg des kürzeren Widerstandes»). Das würde zu einer stärkeren Erwärmung des Heizleiters am Innenradius führen als am Außenradius, wie in Fig. 6 gezeigt. Um dem entgegenzuwirken, weist die Kontaktheizvorrichtung 10 gemäß einem Aspekt der vorliegenden Offenbarung im Bereich der Umlenkung bzw. im Verbindungsbereich 14 der Schenkel 18, 19 am Innenradius Strukturierungen 16 auf, beispielsweise in Form von Schnitten, wie in Fig. 4 und Fig. 5 gezeigt. Diese verengen den Leitungsquerschnitt am Innenradius und erhöhen damit den lokalen, elektrischen Widerstand, sodass die Stromdichte im Bereich der Umlenkung gleichmäßiger über die Breite der Umlenkung verteilt wird und somit auch eine gleichmäßigere Erwärmung über die Breite in diesem Bereich erreicht wird, wie in Fig. 7 gezeigt. Zudem kann mit der Strukturierung 16 auch die Verteilung der Erwärmung in Längsrichtung verbessert werden, indem im Bereich der rückwärtigen Heizkeilspitze die größte Erwärmung erfolgt, wie in Fig. 7 gezeigt. Dies ist für eine gute Schweißnahtqualität von Vorteil, da unmittelbar in diesem Bereich bzw. direkt im Anschluss auch der Andruck erfolgt, wie in Fig. 1 bis Fig. 3 gezeigt.

Die Strukturierung 16 in Form von Verästelungen hat den Vorteil, dass der strukturierte Bereich trotzdem vom Strom durchflossen wird, wenn auch weniger stark, und damit auch erwärmt wird, was eine gleichmäßige Verteilung begünstigt, wie in Fig. 7 gezeigt.

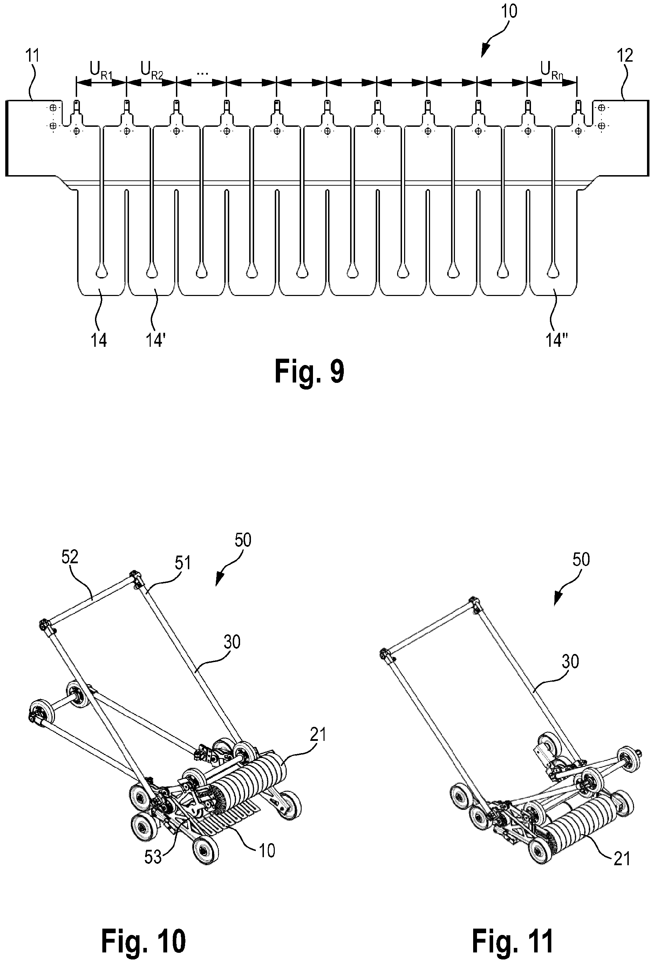

Fig. 9 zeigt eine weitere Ausgestaltung einer Kontaktheizvorrichtung 10, insbesondere zum (voll-)flächigen Verschweißen von Bitumenbahnen. Hierbei können beispielsweise zwei nebeneinander angeordnete untere Materiallagen vorgesehen sein, wobei ein Stoßbereich bzw. eine ggf. vorhandene Lücke zwischen den unteren Materiallagen von einer die unteren Materiallagen überlappenden, oberen Materialbahn abgedeckt werden kann. Dadurch kann eine Abdichtung zwischen den beiden unteren Materiallagen effizient hergestellt werden.

Wie in Fig. 9 gezeigt, kann die Kontaktheizvorrichtung 1 mehrere zwischen den Anschlusselektroden 11, 12 angeschlossene Heizelemente 14 aufweisen, wobei jedes der Heizelemente als direkt bestromter, flacher, planarer Stahlblechzuschnitt ausgebildet ist. Die Strukturierungen im Bereich der Heizkeilspitze sind in diesem Fall weniger wichtig, da einerseits Bitumenbahnen toleranter sind, unter anderem wegen der üblicherweise größeren Materialdicke, und andererseits die Anordnung mehrerer Heizelemente 14, 14`, ... 14" nebeneinander ebenfalls eine homogenisierende Wirkung erzielt, zumindest über die Breite der Schweißnaht bzw. des gesamten Kontaktheizvorrichtung. Der Einsatz von Strukturierungen kann die Temperaturverteilung jedoch weiter verbessern.

Fig. 10 zeigt eine perspektivische Darstellung eines Schweißautomaten 50 mit einer Kontaktheizvorrichtung 10, wie in Fig. 9 dargestellt, mit angehobener Andruckrolle 21. Fig. 11 zeigt eine perspektivische Darstellung des Schweißautomaten 50 aus Fig. 10 mit abgesenkter Andruckrolle 21. Der Schweißautomat 50 kann eingerichtet sein als fahrbarer Schweißautomat 50 zum (vollflächigen) Anschweißen einer Bitumenbahn auf eine bereits ausgelegte Bitumenbahn. Der Schweißautomat 50 kann einen Rahmen 51 aufweisen, an dessen Oberseite ein Handgriff 52 angeordnet ist und der an der Unterseite eine Aufnahme 53 für die Kontaktheizvorrichtung 10 und eine absenkbare Andruckrolle 21 aufweist.

Der Schweißautomat 50 kann beispielweise dazu eingerichtet sein, eine Heizleistung zwischen 2 kW und 20 kW, insbesondere zwischen 5 W und 15 kW, beispielsweise von 10 kW bereitzustellen. Der Schweißautomat 50 kann eingerichtet sein für eine Vorschubgeschwindigkeit zwischen 0.5 m/min und 30 m/min, insbesondere zwischen 1 m/min und 10 m/min, insbesondere zwischen 1 m/min und 5 m/min, beispielsweise für eine Vorschubgeschwindigkeit von 1,5 oder 3 m/min. Eine Breite des Heizelements (im Betrieb quer zur Vorschubrichtung) kann zwischen 10 mm und 1,5 m liegen, insbesondere zwischen 20 cm und 1,5 m, insbesondere zwischen 0,5 m und 1,2 m, beispielsweise für eine Breite von 1 m oder 1,2 m. Die mehreren nebeneinander angeordneten Heizelemente 14, 14` ... 14", welche jeweils als direkt bestromte, flache, planare Stahlblechzuschnitte ausgebildet sind, erlauben eine kostengünstige Herstellung und flexible Anpassung bei Unebenheiten des Untergrunds, wie diese bei der Abdichtung von Dächern vorkommen. Zudem kann mit einem solchen Schweißautomat auf eine offene Flamme, wie sie üblicherweise beim Verlegen von Bitumen verwendet wird, verzichtet werden, was die Sicherheit erhöht.

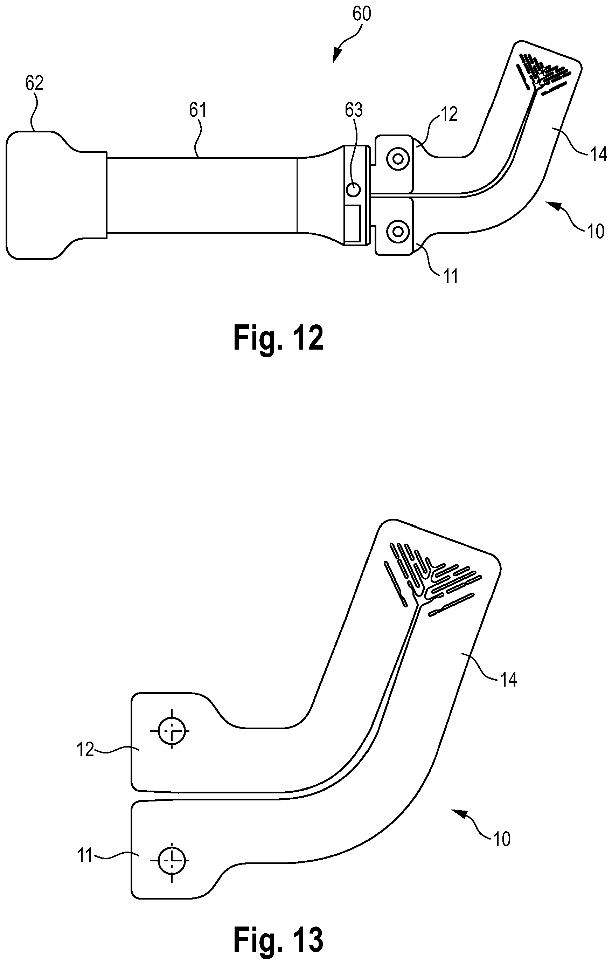

Fig. 12 zeigt ein Handgerät 60 mit einer Kontaktheizvorrichtung 10. Fig. 13 zeigt eine Draufsicht der Kontaktheizvorrichtung 10 für das Handgerät aus Fig. 12. Das Handgerät 60 weist einen Gehäusekörper 61 auf, welcher auch als Handgriff dienen kann. In einer Ausgestaltung als batteriebetriebenes Handgerät 60 weist das Handgerät eine Batterie 62 auf. Die Batterie 62 kann beispielsweise in den Gehäusekörper 61 integriert sein oder auch als Austauschbatterie, beispielsweise im Anschluss an oder integriert in den Gehäusekörper 61 ausgestaltet sein. Das Handgerät 60 kann ferner Bedienelemente 63 aufweisen. Mit den Bedienelementen 63 kann beispielsweise eine gewünschte Temperatur oder Heizleistung eingestellt werden.

Die Kontaktheizvorrichtung 10 kann über eine erste Anschlusselektrode 11 und eine zweite Anschlusselektrode 12 am Gehäuse 61 befestigt und auch gleichzeitig mit Strom versorgt werden. Zwischen den Anschlusselektroden 11, 12 ist ein Heizelement 14 angeschlossen. Das Heizelement 14 ist als direkt bestromter, flacher, planarer Stahlblechzuschnitt ausgebildet. Das Heizelement kann ein oder mehrere weitere Merkmale aufweisen, wie im Rahmen der vorliegenden Offenbarung beschrieben, beispielsweise Strukturierungen, um eine gewünschte Temperaturverteilung bereitzustellen.

Das vorgeschlagene Handgerät 60 kann beispielsweise bei Detailarbeiten oder Reparaturen von zu verbindenden Materialbahnen eingesetzt werden. Beispielsweise werden für Bitumenabdichtungen Bitumenbahn-Teilstücke manuell verschweißt. Auch an schwer zugänglichen Orten kann das vorgeschlagene Handgerät von Vorteil sein. Optional kann die Kontaktheizvorrichtung 10, wie in Fig. 12 und Fig. 13 gezeigt, eine Umlenkung aufweisen bzw. als abgewinkelte Kontaktheizvorrichtung 10 ausgebildet sein. Dies erleichtert ein seitliches Einführen und eine Arbeit entlang eines Verbindungsbereichs zwischen den zu verbindenden Materiallagen. Zudem kann mit einem solchen Handgerät auf eine offene Flamme, wie sie üblicherweise beim Verlegen von Bitumen verwendet wird, verzichtet werden, was die Sicherheit erhöht.

Das Handgerät 60 kann beispielweise dazu eingerichtet sein, eine Heizleistung zwischen 100 W und 3600 W, insbesondere zwischen 250 W und 2500 W, insbesondere zwischen 1000 W und 2000 W, beispielsweise von 1500 W bereitzustellen. Das Handgerät 1 kann eingerichtet sein für Verbindungsgeschwindigkeit zwischen 5 m/min und 30 m/min, insbesondere zwischen 10 m/min und 25 m/min, beispielsweise für eine Vorschubgeschwindigkeit von bis zu 20 m/min. Eine Breite des Heizelements (quer zur Spitze) kann zwischen 10 mm und 100 mm liegen, insbesondere zwischen 15 mm und 75 mm, insbesondere zwischen 20 mm und 50 mm. Beispielhafte Breiten für das Heizelement sind 20 mm, 30 mm, 40 mm und 50 mm. Ein Vorteil dieser Ausgestaltung kann darin bestehen, dass das Heizelement zwar mechanisch flexibel aber noch hinreichend stabil ist.

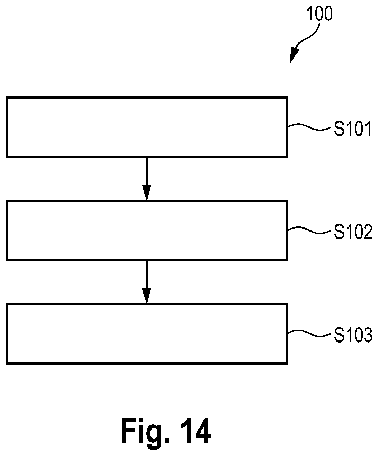

Fig. 14 zeigt ein Flussdiagramm eines Verfahrens 100 zum thermisch induzierten, stoffschlüssigen Verbinden von flachen, flexiblen Materiallagen mit einer Kontaktheizvorrichtung. Insbesondere kann es sich um ein Verfahren handeln, welches in Verbindung mit einer Kontaktheizvorrichtung 10 mit mehreren Heizelementen 14, 14`, ... 14" eingesetzt werden kann, wie beispielhaft in Fig. 9 gezeigt.

In einem ersten Schritt S101 werden die jeweiligen Spannungsabfälle U_{R1}, U_{R2}, ... U_{RN} über die jeweiligen Heizelemente 14, 14`, ... 14" gemessen. In einem nachfolgenden Schritt S102 werden elektrische, temperaturabhängige Teilwiderstände der jeweiligen Heizelemente 14, 14`, ... 14" basierend auf den gemessenen Spannungsabfällen U_{R1}, U_{R2}, ... U_{RN} bestimmt. In Schritt S103 wird eine Temperaturverteilung über eine Breite der Kontaktheizvorrichtung 10 basierend auf den Teilwiderständen der jeweiligen Heizelemente 14, 14`, ... 14" bestimmt. Das vorgeschlagene Verfahren ermöglicht es eine Schweißtemperatur beim thermisch induzierten, stoffschlüssigen Verbinden von flachen, flexiblen Materiallagen zu überwachen. Ein Vorteil dieser Ausgestaltung kann in einer verbesserten Qualitätssicherung und Dokumentation bestehen.

Wenn beispielsweise eines der Heizelemente nicht mehr oder nur in schlechtem Kontakt mit der Materialbahn liegen sollte, beispielsweise durch Faltenwurf der Materialbahn, erwärmt sich das entsprechende Heizelement stärker, da die Wärme nicht mehr über das Material der Materiallage abgeführt wird. Der Widerstand des Heizelements erhöht sich und somit auch eine Teilspannung im Vergleich zu den weiteren Heizelementen. Mit dem vorgeschlagenen Verfahren kann dies sichtbar gemacht und überwacht werden. Somit kann die Prozesssicherheit beim thermischen Verbinden von Materiallagen erhöht werden.

Zusammenfassend können mit den hierin vorgeschlagenen Lösungen eine verbesserte Kontaktheizvorrichtung, ein verbesserter Verbindungsautomat und/oder ein verbessertes Handgerät zum thermisch induzierten stoffschlüssigen Verbinden von schweiß- und/oder klebbaren flachen flexiblen Materiallagen miteinander, die als Materialbahn, Materialband und/oder Materialstück ausgebildet und sich zumindest teilweise überdeckend angeordnet sind, bereitgestellt werden. Hierbei kann die Handhabung verbessert und auch weniger erfahrenen Nutzern die Handhabung erleichtert werden. Ferner kann die vorgeschlagene Lösung dazu beitragen die Betriebssicherheit, die Effizienz und/oder eine Schweißgeschwindigkeit weiter zu verbessern.

## Patentansprüche

1. Kontaktheizvorrichtung (10) zum thermisch induzierten stoffschlüssigen Verbinden von schweiß- und/oder klebbaren flachen flexiblen Materiallagen miteinander, die als Materialbahn, Materialband und/oder Materialstück ausgebildet und sich zumindest teilweise überdeckend angeordnet sind, mit:
- einer ersten Anschlusselektrode (11) und einer zweiten Anschlusselektrode (12); und
- einem zwischen den Anschlusselektroden (11, 12) angeschlossenen Heizelement (14);
wobei das Heizelement (14) als direkt bestromter, flacher, planarer Stahlblechzuschnitt ausgebildet ist.

2. Kontaktheizvorrichtung (10) nach einem der vorhergehenden Ansprüche, wobei der Stahlblechzuschnitt des Heizelements (14) in Längsrichtung mindestens einen Teilschnitt (17) aufweist, insbesondere wobei der Stahlblechzuschnitt des Heizelements eine planare U-förmige Geometrie aufweist.

3. Kontaktheizvorrichtung (10) nach einem der vorhergehenden Ansprüche, wobei der Stahlblechzuschnitt des Heizelements (14) folgendes aufweist:
- einen ersten flachen, planaren Schenkel (18), welcher mit der ersten Anschlusselektrode (11) verbunden ist;
- einen zweiten flachen, planaren Schenkel (19), welcher mit der zweiten Anschlusselektrode (12)verbunden ist;
wobei der erste Schenkel (18) und der zweite Schenkel (19) flach übereinander oder nebeneinander in der gleichen Ebene liegen; und
wobei der Stahlblechzuschnitt des Heizelements (14) an einer Heizelementspitze einen Verbindungsbereich (41) aufweist, welcher den ersten Schenkel (18) und den zweiten Schenkel (19) miteinander verbindet.

4. Kontaktheizvorrichtung (10) nach Anspruch 3, wobei das Heizelement (14) dazu eingerichtet ist, in dem Verbindungsbereich (41) eine gegenüber den Schenkeln (18, 19) erhöhte Temperatur bereitzustellen.

5. Kontaktheizvorrichtung (10) nach Anspruch 3 oder 4, wobei der Verbindungsbereich Strukturierungen (16) in Form von Einschnitten aufweist, die dazu eingerichtet sind, den bestromten Querschnitt lokal im Vergleich zum unstrukturierten Querschnitt zu verkleinern, und damit die Heizleistung lokal zu vergrößern.

6. Kontaktheizvorrichtung (10) nach Anspruch 5, wobei die Einschnitte zumindest abschnittsweise symmetrisch angeordnet sind, insbesondere wobei die Einschnitte baumförmig aufgefächert angeordnet sind.

7. Kontaktheizvorrichtung (10) nach einem der vorhergehenden Ansprüche, wobei die erste und/oder zweite Anschlusselektrode (11, 12) durch Extensionen des Stahlblechzuschnitts gebildet sind und seitlich über das Heizelement (14) hinausragen, insbesondere quer zu einer Vorschubrichtung (31) zum thermischen Verbinden der Materiallagen.

8. Kontaktheizvorrichtung (10) nach einem der vorhergehenden Ansprüche, wobei der Stahlblechzuschnitt des Heizelements (14) eine Dicke zwischen 0,1 mm und 1,5 mm, insbesondere zwischen 0,5 mm und 1,0 mm, insbesondere zwischen 0,7 mm und 0,9 mm aufweist.

9. Kontaktheizvorrichtung (10) nach einem der vorhergehenden Ansprüche, wobei der Stahlblechzuschnitt des Heizelements (14) mechanisch flexibel ist; insbesondere dazu ausgebildet ist, Bodenunebenheiten auszugleichen.

10. Kontaktheizvorrichtung (10) nach einem der vorhergehenden Ansprüche, wobei zusätzlich zu dem Stahlblechzuschnitt, welcher das Heizelements (14) bildet, ein weiterer Abschnitt des Stahlblechzuschnitts vorgesehen ist, wobei der weitere Abschnitt des Stahlblechzuschnitts am rückseitigen Ende einen Saum (13) aufweist, welcher durch eine Faltung oder Doppelung des weiteren Abschnitts des Stahlblechzuschnitts gebildet ist.

11. Kontaktheizvorrichtung (10) nach einem der vorhergehenden Ansprüche, wobei der Stahlblechzuschnitt eine elektrisch leitfähige, temperatur- und korrosionsbeständigen Legierung aufweist, insbesondere Edelstahl

12. Kontaktheizvorrichtung (10) nach einem der vorangegangenen Ansprüche, wobei die Kontaktheizvorrichtung mehrere zwischen den Anschlusselektroden (11, 12) angeschlossene Heizelemente (14, 14`, 14") aufweist, wobei jedes der Heizelemente als direkt bestromter, flacher, planarer Stahlblechzuschnitt ausgebildet ist.

13. Verbindungsautomat (1) zum thermisch induzierten, stoffschlüssigen Verbinden von flachen, flexiblen Materiallagen mit einer Kontaktheizvorrichtung (10) nach einem der vorhergehenden Ansprüche.

14. Handgerät (60), insbesondere batteriebetriebenes Handgerät, zum thermisch induzierten, stoffschlüssigen Verbinden von flachen, flexiblen Materiallagen mit einer Kontaktheizvorrichtung (10) nach einem der vorhergehenden Ansprüche.

15. Verfahren (100) zum thermisch induzierten, stoffschlüssigen Verbinden von flachen, flexiblen Materiallagen mit einer Kontaktheizvorrichtung (10) nach Anspruch 12, mit den Schritten:
- Messen von jeweiligen Spannungsabfällen über die jeweiligen Heizelemente (S101),
- Bestimmen von elektrischen, temperaturabhängigen Teilwiderständen der jeweiligen Heizelemente basierend auf den gemessenen Spannungsabfällen (S102); und
- Bestimmen einer Temperaturverteilung über eine Breite der Kontaktheizvorrichtung basierend auf den Teilwiderständen der jeweiligen Heizelemente (S103).

## Geänderte Patentansprüche

### Geänderte Patentansprüche gemäss Regel 137(2) EPÜ.

1. Kontaktheizvorrichtung (10) zum thermisch induzierten stoffschlüssigen Verbinden von schweiß- und/oder klebbaren flachen flexiblen Materiallagen miteinander, die als Materialbahn, Materialband und/oder Materialstück ausgebildet und sich zumindest teilweise überdeckend angeordnet sind, mit:
- einer ersten Anschlusselektrode (11) und einer zweiten Anschlusselektrode (12); und
- einem zwischen den Anschlusselektroden (11, 12) angeschlossenen Heizelement (14);
wobei das Heizelement (14) als direkt bestrombarer, flacher, planarer Stahlblechzuschnitt ausgebildet ist;
wobei der Stahlblechzuschnitt des Heizelements (14) folgendes aufweist:
- einen ersten flachen, planaren Schenkel (18), welcher mit der ersten Anschlusselektrode (11) verbunden ist;
- einen zweiten flachen, planaren Schenkel (19), welcher mit der zweiten Anschlusselektrode (12)verbunden ist;
wobei der erste Schenkel (18) und der zweite Schenkel (19) flach übereinander oder nebeneinander in der gleichen Ebene liegen; und
wobei der Stahlblechzuschnitt des Heizelements (14) an einer Heizelementspitze einen Verbindungsbereich (41) aufweist, welcher den ersten Schenkel (18) und den zweiten Schenkel (19) miteinander verbindet;
**dadurch gekennzeichnet, dass** das Heizelement (14) dazu eingerichtet ist, in dem Verbindungsbereich (41) eine gegenüber den Schenkeln (18, 19) erhöhte Temperatur bereitzustellen.

2. Kontaktheizvorrichtung (10) nach einem der vorhergehenden Ansprüche, wobei der Stahlblechzuschnitt des Heizelements (14) in Längsrichtung mindestens einen Teilschnitt (17) aufweist, insbesondere wobei der Stahlblechzuschnitt des Heizelements eine planare U-förmige Geometrie aufweist.

3. Kontaktheizvorrichtung (10) nach einem der vorhergehenden Ansprüche, wobei der Verbindungsbereich Strukturierungen (16) in Form von Einschnitten aufweist, die dazu eingerichtet sind, den bestromten Querschnitt lokal im Vergleich zum unstrukturierten Querschnitt zu verkleinern, und damit die Heizleistung lokal zu vergrößern.

4. Kontaktheizvorrichtung (10) nach Anspruch 3, wobei die Einschnitte zumindest abschnittsweise symmetrisch angeordnet sind.

5. Kontaktheizvorrichtung (10) nach Anspruch 4, wobei die Einschnitte baumförmig aufgefächert angeordnet sind.

6. Kontaktheizvorrichtung (10) nach einem der vorhergehenden Ansprüche, wobei die erste und/oder zweite Anschlusselektrode (11, 12) durch Extensionen des Stahlblechzuschnitts gebildet sind und seitlich über das Heizelement (14) hinausragen, insbesondere quer zu einer Vorschubrichtung (31) zum thermischen Verbinden der Materiallagen.

7. Kontaktheizvorrichtung (10) nach einem der vorhergehenden Ansprüche, wobei der Stahlblechzuschnitt des Heizelements (14) eine Dicke zwischen 0,1 mm und 1,5 mm, insbesondere zwischen 0,5 mm und 1,0 mm, insbesondere zwischen 0,7 mm und 0,9 mm aufweist.

8. Kontaktheizvorrichtung (10) nach einem der vorhergehenden Ansprüche, wobei der Stahlblechzuschnitt des Heizelements (14) mechanisch flexibel ist; insbesondere dazu ausgebildet ist, Bodenunebenheiten auszugleichen.

9. Kontaktheizvorrichtung (10) nach einem der vorhergehenden Ansprüche, wobei zusätzlich zu dem Stahlblechzuschnitt, welcher das Heizelements (14) bildet, ein weiterer Abschnitt des Stahlblechzuschnitts vorgesehen ist, wobei der weitere Abschnitt des Stahlblechzuschnitts am rückseitigen Ende einen Saum (13) aufweist, welcher durch eine Faltung oder Doppelung des weiteren Abschnitts des Stahlblechzuschnitts gebildet ist.

10. Kontaktheizvorrichtung (10) nach einem der vorhergehenden Ansprüche, wobei der Stahlblechzuschnitt eine elektrisch leitfähige, temperatur- und korrosionsbeständigen Legierung aufweist, insbesondere Edelstahl

11. Kontaktheizvorrichtung (10) nach einem der vorangegangenen Ansprüche, wobei die Kontaktheizvorrichtung mehrere zwischen den Anschlusselektroden (11, 12) angeschlossene Heizelemente (14, 14', 14") aufweist, wobei jedes der Heizelemente als direkt bestrombarer, flacher, planarer Stahlblechzuschnitt ausgebildet ist.

12. Verbindungsautomat (1) zum thermisch induzierten, stoffschlüssigen Verbinden von flachen, flexiblen Materiallagen mit einer Kontaktheizvorrichtung (10) nach einem der vorhergehenden Ansprüche.

13. Handgerät (60), insbesondere batteriebetriebenes Handgerät, zum thermisch induzierten, stoffschlüssigen Verbinden von flachen, flexiblen Materiallagen mit einer Kontaktheizvorrichtung (10) nach einem der vorhergehenden Ansprüche.

14. Verfahren (100) zum thermisch induzierten, stoffschlüssigen Verbinden von flachen, flexiblen Materiallagen mit einer Kontaktheizvorrichtung (10) zum thermisch induzierten stoffschlüssigen Verbinden von schweiß- und/oder klebbaren flachen flexiblen Materiallagen miteinander, die als Materialbahn, Materialband und/oder Materialstück ausgebildet und sich zumindest teilweise überdeckend angeordnet sind, mit einer ersten Anschlusselektrode (11) und einer zweiten Anschlusselektrode (12); wobei die Kontaktheizvorrichtung mehrere zwischen den Anschlusselektroden (11, 12) angeschlossene Heizelemente (14, 14', 14") aufweist, wobei jedes der Heizelemente als direkt bestrombarer, flacher, planarer Stahlblechzuschnitt ausgebildet ist, wobei das Verfahren folgende Schritte aufweist:
- Messen von jeweiligen Spannungsabfällen über die jeweiligen Heizelemente (S101),
- Bestimmen von elektrischen, temperaturabhängigen Teilwiderständen der jeweiligen Heizelemente basierend auf den gemessenen Spannungsabfällen (S102); und
- Bestimmen einer Temperaturverteilung über eine Breite der Kontaktheizvorrichtung basierend auf den Teilwiderständen der jeweiligen Heizelemente (S103).
